(19) Europäisches Patentamt
European Patent Office
Office européen des brevets

(11) Publication number: 0 232 956 B1

(12) **EUROPEAN PATENT SPECIFICATION**

(45) Date of publication of the patent specification: **15.11.89**

(51) Int. Cl.⁴: **B60T 8/32**

(21) Application number: **87300053.3**

(22) Date of filing: **06.01.87**

(54) **Wheel lock brake control apparatus and method.**

(30) Priority: **10.02.86 US 827507**

(43) Date of publication of application:
**19.08.87 Bulletin 87/34**

(45) Publication of the grant of the patent:
**15.11.89 Bulletin 89/46**

(84) Designated Contracting States:
**DE FR GB IT**

(56) References cited:
**EP-A- 0 223 358**
**US-A- 3 131 975**
**US-A- 3 663 069**
**US-A- 4 225 195**

**PATENT ABSTRACTS OF JAPAN, vol. 8, no. 100 (M-295)[1537], 11th May 1984; & JP - A - 59 14566 (NIPPON DENKI K.K.) 25-01-1984**

(73) Proprietor: **GENERAL MOTORS CORPORATION, General Motors Building 3044 West Grand Boulevard, Detroit Michigan 48202(US)**

(72) Inventor: **Kade, Alexander, 1071 Hollywood, Grosse Pointe Woods Michigan 48236(US)**

(74) Representative: **Denton, Michael John et al, Patent Section - Luton Office (F6) Vauxhall Motors Limited P.O. Box 3 Kimpton Road, Luton Bedfordshire LU2 0SY(GB)**

EP 0 232 956 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to wheel lock control apparatus and method for wheel brakes of a vehicle.

When the wheel brakes of a vehicle are applied, a braking force between the wheel and the road surface is generated that is dependent upon various parameters including the road surface condition and the amount of slip between the wheel and the road surface. For a given road surface, the force between the wheel and the road surface increases with increasing wheel slip to a peak force occurring at a critical wheel slip value. As the value of wheel slip increases beyond the critical wheel slip value, the force between the wheel and the road surface decreases. Stable braking results when the wheel slip is equal to or less than the critical wheel slip value. However, when the wheel slip becomes greater than the critical wheel slip value, braking becomes unstable resulting in sudden wheel lockup, reduced vehicle stopping distance and a deterioration in the lateral stability of the vehicle.

In our European patent application no 0 223 358 there is described a wheel lock control apparatus for preventing the wheels of a vehicle from locking up while being braked. This earlier application is part of the state of the art only when considering novelty according to Article 54(3) EPC. In this apparatus, the brake pressure that results in the wheel slip being at the critical wheel slip value and which produces the maximum braking force between the tyre and the road surface is identified. When an incipient wheel lockup condition is detected, the brake pressure so identified is then applied to the wheel brake so as to substantially continuously establish the critical wheel slip value between the wheel and the road surface resulting in the maximum possible braking effort.

The brake pressure producing the critical wheel slip value and therefore the maximum braking force is identified in the above apparatus by repeatedly calculating the braking force between the wheel and the road surface during braking based on an equation defining the motion of a free body consisting of the wheel, tyre and the brake. This equation utilizes measured values and apparatus constants that are based on, for example, brake lining coefficient of friction and area and wheel radius. The brake pressure corresponding in time to the peak calculated force is stored. When an incipient wheel lockup is detected indicating that the critical wheel slip value and therefore the peak braking force between the wheel and road surface has been exceeded, the stored brake pressure that produced the peak braking force is reestablished to establish a braking condition in which the wheel slip is substantially at the critical wheel slip value for the existing road-tyre interface condition.

As long as the relationship between the constants assumed in the equation for determining the braking force are correct, the wheel brake pressure establishing the maximum braking force between the tyre and the road surface is accurately determined. However, the constants and their relationship establishing optimum braking for a new vehicle may not remain optimum over the life of the vehicle or for all braking conditions. For example, the brake lining coefficient of friction may vary with use and with operating conditions such as temperature and the tyre characteristics may change with wear. These variations in the parameters upon which the constants were based may affect the determination of the peak braking force and therefore the brake pressure establishing the critical wheel slip value.

It would therefore be desirable to adjust the constants as the parameters upon which they were based change so that the brake pressure establishing the critical wheel slip value during wheel lock control braking is accurately determined over the life of the vehicle and for all braking conditions.

It is an object of the present invention to provide a wheel lock control apparatus and a method that automatically adjusts the constants used in determining the peak braking force during vehicle braking so that the brake pressure establishing the critical wheel slip value during anti-lock braking is accurately determined over the life of the vehicle.

To this end, a wheel lock control apparatus and a method in accordance with the present invention are characterised by the features specified in Claims 1 and 4 respectively.

In accordance with this invention, the constants based on braking apparatus and wheel parameters that are utilized in the above-described wheel lock control apparatus in determining the braking force between the wheel and the road surface during braking are adaptively adjusted during wheel lock controlled braking to compensate for changes in the braking apparatus and wheel parameters. In the preferred embodiment of this invention, during wheel lock control braking the wheel lock control apparatus repeatedly identifies the brake pressure producing the maximum calculated braking force by ramping the brake pressure following each brake pressure application and storing the brake pressure producing the maximum calculated braking force. The relationship between the constants used to calculate the braking force are adaptively adjusted based on the time required for the ramped brake pressure to cause an incipient wheel lockup condition so as to compensate for changes in the braking apparatus parameters during braking or over the life of the vehicle.

The invention is now described, by way of example, with reference to the following description of a preferred embodiment and the accompanying drawings, in which:-

Figure I is a diagram illustrating the brake force coefficient between a wheel and a road surface as a function of the percentage slip between the wheel and road surface for two road surface conditions;

Figure 2 is a general diagram of wheel lock control apparatus of braking apparatus for controlling the brakes in accordance with the principles of this invention;

Figure 3 is a longitudinal cross-sectional view of the motor driven actuator of Figure 2 for modulating the brake pressure to prevent wheel lockup;

Figure 4 is a diagram of the electronic controller of Figure 2 that is responsive to the braking apparatus parameters for controlling the brake pressure to inhibit wheel lockup in accordance with the principles of this invention; and

Figures 5 to 9 are diagrams illustrating the operation of the electronic controller of Figure 4.

A wheel under the influence of braking has two major torques acting on it: brake torque and tyre torque. Brake torque arises from the application of brake pressure through the brake mechanism and tyre torque is generated by the friction of the tyre-road interface as wheel slip occurs.

Brake torque $T_b$ is assumed to be proportional to hydraulic brake pressure $P_b$ with a brake gain constant $k_0$ dependent upon braking apparatus parameters such as the coefficient of friction of the brake linings and is defined by the expression

$$T_b = k_0 P_b. \quad (I)$$

Tyre torque $T_t$ is related to the brake force coefficient $\mu$ between the tyre and the road surface, the normal load N on the tyre and the wheel rolling radius R and is defined by the expression

$$T_t = \mu NR. \quad (2)$$

For the free body consisting of the brake, wheel, and tyre, the equation of motion is

$$k_1\dot{\omega} + T_b - T_t = 0 \quad (3)$$

where the constant $k_1$ is the wheel moment of inertia that is dependent upon wheel and tyre characteristics and $\dot{\omega}$ is the rate of change of wheel speed or wheel angular acceleration. When the difference between the tyre torque and the brake torque is positive, the wheel accelerates; and when negative, the wheel decelerates.

Combining expressions (I) and (3), tyre torque $T_t$ is defined as

$$T_t = k_0 P_b + k_1\dot{\omega} \quad (4)$$

As can be seen, the tyre torque can be calculated from the constants $k_0$ and $k_1$, the value of brake pressure $P_{\underline{b}}$ which can be measured and $\dot{\omega}$ which can be determined by differentiating the value of measured wheel speed.

The brake friction coefficient term $\mu$ of the tyre torque $T_t$ is a nonlinear function of the magnitude of slip between the wheel and the road surface during braking and is dependent upon the road surface condition. Figure I illustrates the brake friction coefficient as a function of percentage-wheel slip for two road surface conditions. For a given road surface, it can be seen that as wheel slip is increased in response to increased brake torque $T_b$, the brake friction coefficient and therefore the tyre torque $T_t$ increases until a critical wheel slip value at which the brake friction coefficient and the tyre torque are at a maximum. A further increase in wheel slip results in a decrease in the brake friction coefficient and tyre torque. The maximum tyre torque resulting in a maximum braking effort for a given road surface is achieved when the brake torque $T_b$ produces the critical wheel slip value. When the braking effort produces a wheel slip exceeding the critical wheel slip value, the braking operation becomes unstable and typically results in sudden wheel lockup which in turn results in increased stopping distance and a deterioration in the steering and lateral stability of the vehicle.

The wheel lock control apparatus identifies the value of the hydraulic brake pressure $P_b$ that produces the maximum tyre torque $T_t$. This is accomplished by continuously calculating the tyre torque value $T_t$ of equation (4) during braking. Any time the calculated value is larger than any previously calculated value, the value of the hydraulic brake pressure $P_b$ is stored so that the brake pressure producing the maximum tyre torque is known. When an incipient wheel lock is detected, the brake pressure is dumped to allow the wheel speed to recover and the brake pressure is thereafter reapplied to the stored value or a predetermined fraction thereof (such as 0.9) to establish a braking condition in which the wheel slip is substantially at the critical wheel slip value for the existing road surface condition. This results in substantially the maximum possible tyre torque and minimum stopping distance for the road surface condition.

The brake pressure is then ramped up according to a predetermined rate schedule while determining the brake pressure producing the maximum tyre torque as above and until an incipient wheel lock is again detected at which time the brake pressure is again dumped to allow the wheel speed to recover. Thus, the cycle is continuously repeated to repeatedly identify and apply the brake pressure resulting in the maximum braking effort. The ramp rate of the brake pressure is selected to force a reidentification of the brake pressure resulting in the maximum braking effort at intervals ranging between, for example, 0.25 - 0.5 seconds for all road surface conditions.

If the relationship or ratio of the constants $k_0$ and $k_1$ in the expression (4) are chosen for a new vehicle, the relationship may not remain optimum over the life of the vehicle or for all braking conditions. If the relationship should change, an improper estimation of the tyre torque results which in turn results in the determined brake pressure producing the maximum braking effort being offset from the actual brake pressure producing maximum braking effort.

For example, if the ratio $k_0/k_1$ is greater than the optimal ratio, a brake pressure will be identified that results in a wheel slip greater than the critical wheel slip value. Upon the establishment of this pressure, an immediate wheel lockup condition will result. This condition can be recognized by a short time period (less than 0.25 seconds in one embodiment) between successive dumps of the brake pressure in response to detected incipient wheel lockup conditions. On the other hand, if the ratio $k_0/k_1$ is less

than the optimal ratio, a brake pressure will be identified that results in a wheel slip less than the critical wheel slip value and therefore less than optimum braking effort. This condition can be recognized by a long time period (greater than 0.5 seconds in one embodiment) between successive dumps of the brake pressure in response to detected incipient wheel lockup conditions caused by ramping the brake pressure after each reapplication of pressure following wheel recovery.

This invention determines a variation of the ratio $k_0/k_1$ from the optimum ratio my monitoring the time period between successive dumps of the brake pressure (the time of one brake pressure dump-apply cycle) in response to detected incipient wheel lockup conditions. If the time period (or a succession of them) are outside of a predetermined range such as 0.25 - 0.5 seconds, the constants $k_0$ and $k_1$ are adjusted in direction to cause the time periods of the brake pressure dump-apply cycles to be within the predetermined range. This assures an identification and reapplication of a brake pressure producing substantially the critical wheel slip value and therefore maximum braking effort for all braking conditions and over the life of the vehicle.

A general overview of the braking apparatus including the wheel lock control apparatus of this invention is illustrated in Figure 2. The control of the brake of a single wheel is illustrated, it being understood that the control of the brakes of the remaining wheels of the vehicle are identical thereto. A standard wheel brake I0 for a wheel II is actuated by controlled hydraulic pressure from one of two sources. The primary source is a motor driven actuator I2 and the secondary source is a standard master cylinder I4 controlled directly by a brake pedal I6 of the vehicle. An electromagnetic valve I8 which is normally open, is energized when the motor driven actuator I2 is operative to control the hydraulic pressure to the wheel brake I0 so as to decouple the master cylinder I4 and brake pedal I6 from the hydraulic pressure output of the motor driven actuator I2. This prevents pressure feedback to the vehicle operator while brake pressure is controlled by the motor driven actuator I2. When the electromagnetic valve I8 is deenergized, the hydraulic brake pressure to wheel brake I0 may be modulated directly by the brake pedal I6 and master cylinder I4.

The electromagnetic valve I8 is deenergized only during limited vehicle operating conditions such as low vehicle speed or during failed conditions of the primary hydraulic pressure source to permit brake pressure modulation by the master cylinder I4. At all other times, the electromagnetic valve I8 is energized to decouple the master cylinder I4 from the braking apparatus.

An electronic controller 20 is responsive to the outputs of a brake pedal force sensor 22 providing a signal that is a measure of the brake pedal force F applied by the operator, a wheel speed sensor 24 that provides a signal that is a measure of wheel speed $\omega$, and a pressure sensor 26 that provides a signal that is a measure of the hydraulic brake pressure $P_b$ applied to the wheel brake I0 from the master cylinder I4 or the motor driven actuator I2. The electronic controller 20 is responsive to those signals to (a) energize the electromagnetic valve I8 when the wheel speed exceeds a value corresponding to a low vehicle speed such as 3 mph, (b) control the motor driven actuator I2 so as to apply a hydraulic brake pressure $P_b$ to the wheel brake I0 that is proportional to the brake pedal force F times a gain constant G for providing power assist during normal braking conditions, and (c) limit the hydraulic brake pressure $P_b$ applied to the wheel brake I0 to a value that results in the maximum possible tyre torque $T_t$ for the road surface condition to prevent wheel lockup and to provide for the shortest possible stopping distance, lateral vehicle stability and controllable vehicle steering.

Referring to Figure 3, the motor driven actuator I2 in the preferred embodiment includes a DC torque motor 28 whose output shaft drives an input gear 30 which in turn rotatably drives an output gear 32. A drive member 34 of a ball screw actuator is secured for rotation with the output gear 32. The drive member 34 engages and axially positions a driven member 36 of the ball screw actuator. The driven member 36 drives a piston 38 to control the hydraulic pressure output of the motor driven actuator I2. In summary, the torque output of the DC torque motor 28 is translated to a directly related hydraulic brake pressure $P_b$ output of the motor driven actuator I2 that is applied to the wheel brake I0.

The motor driven actuator I2 may also take other forms. For example, it may take the form of a duty cycle modulated solenoid having an armature applying a controlled force to the piston 38. Additionally, the DC torque motor 28 current may be used as a measure of the hydraulic brake pressure $P_b$ in place of the pressure sensor 26 since the torque output of the DC torque motor 28 and therefore the hydraulic brake pressure $P_b$ is related to the motor current.

As specifically illustrated in Figure 4, the electronic controller 20 in the present embodiment takes the form of a digital computer 40 and a motor control circuit 4I. The digital computer is standard in form and includes a central processing unit (CPU) which executes an operating program permanently stored in a read-only memory (ROM) which also stores tables and constants utilized in controlling the hydraulic pressure input to the wheel brake I0. Contained within the CPU are conventional counters, registers, accumulators, flag flip flops, etc. along with a clock which provides a high frequency clock signal.

The digital computer 40 also includes a random access memory (RAM) into which data may be temporarily stored and from which data may be read at various address locations determined in accordance with the program stored in the ROM. A power control unit (PCU) receives battery voltage and provides regulated power to the various operating circuits in the electronic controller 20.

The digital computer 40 further includes an input/output circuit (I/O) that in turn includes a discrete output section controlled by the CPU to provide a control signal to the electromagnetic valve I8. In controlling the wheel brake I0, the digital com-

puter 40 outputs a digital signal to the motor control circuit 4l via the I/O representing a desired value of the hydraulic brake pressure. The motor control circuit 4l converts the digital signal representing the desired hydraulic brake pressure to an analogue signal which is compared with the actual measured value of the hydraulic brake pressure $P_b$. By standard closed loop adjustment that may include both proportional and integral terms, the DC torque motor 28 current is controlled so that the actual measured hydraulic brake pressure $P_b$ is made equal to the desired hydraulic brake pressure.

The I/O also includes an input counter section which receives a pulse output from the wheel speed sensor 24 having a frequency representing wheel speed. Wheel speed is then determined by counting clock pulses between wheel speed pulses.

An analogue-to-digital unit (ADU) is included which provides for the measurement of analogue signals. The analogue signals representing conditions upon which the hydraulic brake pressure to the wheel brake I0 is based are supplied to the ADU. In the present embodiment, those signals include the hydraulic brake pressure $P_b$ from the pressure sensor 26 and the output of the brake pedal force sensor 22 providing a measure of the brake pedal force F. The analogue signals are sampled and converted under the control of the CPU and stored in ROM designated RAM memory locations.

The operation of the electronic controller 20 in controlling the hydraulic brake pressure to the wheel brake I0 in accordance with the principles of this invention is illustrated in the Figures 5-9. Referring first to Figure 5, when power is first applied to the apparatus such as when the vehicle ignition switch is rotated to its "on" position, the program is initiated at point 42 and then proceeds to a step 44 where the digital computer 40 provides for apparatus initialization. For example, at this step 44 initial values stored in the ROM are entered into ROM designated RAM memory locations and counters, flags and timers are initialized.

After the initialization step 44, the program proceeds to a step 46 where the program allows interrupts to occur and then to a step 48 where a background loop is continuously repeated. This background loop may include, for example, diagnostic routines. In the preferred embodiment of this invention, an interrupt is provided by the CPU at 5 millisecond intervals during which the routines for establishing the hydraulic brake pressure $P_b$ are executed.

Referring to Figure 6, the 5 millisecond interrupt routine for controlling the wheel brake is illustrated. This interrupt routine is entered at step 50 and proceeds to a step 52 where the last measured wheel speed is saved and the new values of wheel speed, brake pedal force and hydraulic brake pressure are read and stored in ROM designated RAM memory locations.

Next at a step 53, a timing register timing the time $t_n$ between successive dumps of the brake pressure in response to sensed incipient wheel lockup conditions is incremented. As will be described, this time is used in the adaptive adjustment of the constants of equation (4) in accordance with this invention.

At decision point 54, the program determines whether or not the operator is commanding brake application. The wheel brakes I0 are considered applied if the value of the brake pedal force F is greater than zero. If the wheel brakes I0 are not applied, the program proceeds to a step 56 where a brake pressure command value $P_c$ is set equal to zero. Also at this step 56, the speed of the vehicle as represented by the speed $\omega_v$ of a hypothetical unbraked wheel is set equal to the wheel speed measured at step 52. Since the wheel brakes I0 are not applied, the wheel slip is substantially at zero so that the actual and hypothetical wheel speeds can be equated.

From step 56, the program proceeds to a step 58 where a D-flag is reset to condition the program to execute an identification routine (illustrated in Figure 7) which identifies the brake pressure producing the critical wheel slip value and therefore the maximum possible braking effort and which establishes the identified brake pressure following the sensing of an incipient wheel lockup condition. As will be described, the D-flag is set when an incipient wheel lockup condition is sensed to condition the program to execute a dump routine (illustrated in Figure 8) to dump the brake pressure and allow the wheel speed to recover. Also at step 58, the maximum allowable hydraulic brake pressure $P_m$ is set equal to a calibration constant $K_p$ such as I0342 kPa (I500 psi) and a RAM memory location storing the value of the maximum calculated tyre torque value $T_{tm}$ is set equal to zero. Thereafter, the program exits the 5 millisecond interrupt routine and returns to the background loop of step 48 of Figure 5.

The foregoing steps/decision points 52 to 58 are continuously repeated at 5 millisecond intervals as long as the vehicle operator does not command brake application. However, when a brake pedal force F is applied to the brake pedal I6, the program proceeds from decision point 54 to a series of steps that provide an estimation of the value of vehicle speed $\omega_v$ as represented by the speed of a hypothetical unbraked wheel. It is noted that the initial value of vehicle speed was set equal to the actual wheel speed at step 56 prior to operation of the brake pedal I6. This series of steps begins at step 59 where the rate of change of wheel speed $\dot{\omega}$ is determined from the old value of wheel speed saved at step 52 and the new value stored at step 52. The determined rate of change of wheel speed is then compared with a constant deceleration of Ig at decision point 60. The Ig deceleration value represents the maximum possible vehicle deceleration. When wheel deceleration is less than Ig, it is assumed that the vehicle is decelerating at the same rate as the wheel II. If, however, the wheel deceleration exceeds Ig, it is assumed that the vehicle deceleration remains at the maximum value of Ig.

If the wheel deceleration is less than or equal to Ig, the program proceeds from decision point 60 to a decision point 62 where $\dot{\omega}$ is compared to zero. If the comparison indicates wheel deceleration, the program proceeds to step 64 where the rate of change of vehicle speed $\dot{\omega}_v$ is set equal to the actual measured rate of change of wheel speed. If, however, the comparison at decision point 62 indicates no change in wheel speed or wheel acceleration, the program proceeds to a step 66 where the rate of change of vehicle speed $\dot{\omega}_v$ is set equal to zero.

Returning to decision point 60, if it is determined that the wheel deceleration is lg or greater, the program proceeds to a step 68 where $\dot{\omega}_v$ is set equal to the maximum possible vehicle deceleration of lg.

From the respective steps 64, 66 or 68, the program proceeds to a step 70 where vehicle speed is estimated. This estimation is based on an initial value of vehicle speed $\omega_{v-l}$ determined during the previous execution of the interrupt routine and the rate of change of vehicle speed determined at step 64, 66 or 68 over the 5 millisecond interval $\Delta t$ between interrupt periods.

From step 70, the program proceeds to decision point 72 where the actual wheel speed measured at step 52 is compared to the vehicle speed determined at step 70. If the wheel speed is equal to or greater than the vehicle speed (which cannot occur during braking of the wheel), the value of vehicle speed is corrected at step 74 by setting the vehicle speed equal to wheel speed and the initial vehicle speed $\omega_{v-l}$ to be used at step 70 in the next execution of the interrupt routine is set equal to wheel speed. If at decision point 72 the wheel speed is determined to be less than the vehicle speed, the program proceeds to a step 76 where the initial vehicle speed $\omega_{v-l}$ to be used at step 70 during the next execution of the interrupt routine set equal to the value of vehicle speed determined at step 70.

Following step 74 or step 76, the program proceeds to a decision point 78 where the vehicle speed is compared to a calibration constant such as 3 mph. If the vehicle speed is less than 3 mph, the program proceeds to a step 80 where the brake pressure command value $P_c$ is set equal to the value of the brake pedal force F times the gain constant G for providing power assisted braking. Thereafter, the program proceeds to a step 82 where the electromagnetic valve l8 of Figure 2 is deenergized and then to the step 58 previously described.

If the vehicle speed is greater than 3 mph, the program proceeds from decision point 78 to step 84 where the electromagnetic valve l8 is energized to decouple the master cylinder l4 from the motor driven actuator l2. Brake application is thereafter provided solely via the motor driven actuator l2 as controlled by the electronic controller 20. From step 84, the program proceeds to a decision point 86 where the state of the D-flag is sampled. If the D-flag is reset to condition the program to execute the identify routine, the program proceeds to a step 88 where the identify routine is executed.

If decision point 86 determines that the D-flag is set, the program is conditioned to execute a dump routine, and the program proceeds to a step 90 where the dump routine is executed. During this dump routine, the pressure to the wheel brake l0 is dumped to allow the speed of the wheel ll to recover from an incipient lockup condition. Following the steps 88 or 90, the program exits the 5 millisecond interrupt routine of Figure 6 and returns to the background loop of step 48 of Figure 5.

Referring to Figure 7, the identify routine of step 88 of Figure 6 is illustrated. This identify routine defines identifying means which (A) provides for power assisted braking, (B) identifies the hydraulic brake pressure producing the critical wheel slip value corresponding to the maximum possible braking force between the tyre and the road surface, (C) senses an incipient wheel lockup condition and conditions the program to execute the dump routine to allow wheel recovery from the lockup condition, (D) reestablishes the hydraulic brake pressure to the identified brake pressure producing the critical wheel slip value, (E) adaptively reduces the hydraulic brake pressure until a stable braking pressure is identified if the brake pressure originally identified results in unstable braking due to apparatus parameter changes and (F) adaptively changes the constants in the expression used to estimate the tyre torque.

The identify routine is entered at point 92 and proceeds to a step 94 which defines estimating means where the value of the tyre torque $T_t$ is calculated in accordance with the equation (4) from the wheel deceleration determined at step 59, the hydraulic brake pressure measured at step 52 and the constants $k_0$ and $k_1$. From step 94, the program proceeds to a decision point steps 96 and a step 98 that function to identify the brake pressure producing the maximum value of tyre torque. At decision point 96, the tyre torque calculated at step 94 is compared with the maximum previously calculated value $T_{tm}$ stored in memory. If the value calculated at step 94 is greater than the stored value, the program proceeds to step 98 where the stored value $T_{tm}$ is set equal to the larger value calculated at step 94. Also at this step 98, a stored value of hydraulic brake pressure $P_{bm}$ is set equal to the hydraulic brake pressure $P_b$ measured at step 52. Therefore, the stored value $P_{bm}$ represents the hydraulic brake pressure corresponding in time to the maximum calculated value of tyre torque stored at step 98.

The foregoing sequence of decision point 96 and step 98 are repeated with each execution of the identify routine as long as the tyre torque is increasing so that the hydraulic brake pressure resulting in the maximum calculated value of tyre torque is always known. If decision point 96 should determine that the calculated value of tyre torque $T_t$ is less than the stored maximum calculated value $T_{tm}$, step 98 is bypassed. This will occur when the hydraulic brake pressure $P_b$ results in a wheel slip that exceeds the critical wheel slip value which in turn results in a decrease in the tyre torque. The stored value of hydraulic brake pressure $P_{bm}$ then represents the hydraulic brake pressure establishing the critical wheel slip value and therefore the maximum braking effort. As will be described, this stored value of hydraulic brake pressure is utilized after an incipient wheel lock condition is detected to reestablish a braking condition that produces substantially the critical wheel slip value.

The program next determines whether or not an incipient wheel lock condition exists as represented by excessive wheel deceleration or excessive wheel slip. At decision point l00, the rate of change in wheel speed determined at step 59 is compared with a deceleration reference value such as l0g which, if exceeded, indicates that braking has become unstable and an incipient wheel lockup condition exists. If decision point l00 does not detect an incipient wheel lockup condition, the program proceeds to decision point l02 where the ratio $\omega/\omega_v$ is compared with a reference value $S_m$ which represents a wheel slip that exceeds the largest possible critical wheel slip value for any road surface condition. A ratio less than $S_m$ indicates that braking has become unstable and an incipient wheel lockup condition exists.

If neither of the decision points l00 and l02 detects an incipient wheel lockup condition, the program proceeds to a decision point l04 where the value of the operator requested brake pressure that is equal to the applied brake pedal force F times the gain constant G is compared with the maximum allowable hydraulic brake pressure $P_m$. If the product is less than the maximum value, the program proceeds to a step l05 where an adaptive identifier enable flag is reset to disable the adaptive identifier routine that adaptively adjusts the ratio of the constants $k_0$ and $k_1$. The program then executes a step l06 where the brake pressure command value $P_c$ is adjusted toward the operator requested pressure in accordance with a first order lag filter equation to provide power assisted braking. Thereafter, the program exits the identify routine and returns to the background loop step 48.

If at decision point l04 it is determined that the operator requested brake pressure is greater than the maximum allowable hydraulic pressure $P_m$, the program proceeds to a pressure ramp routine where, through repeated executions of the identify routine, the maximum allowable hydraulic brake pressure $P_m$ and the brake pressure command value $P_c$ are ramped up until decision point l04 detects that the maximum allowable hydraulic brake pressure has become greater than the operator requested brake pressure or, if the operator requested brake pressure results in an unstable braking condition, until the brake pressure command value results in an incipient wheel lockup condition at which time the brake pressure establishing the critical wheel slip value has been identified by the decision point 96 and step 98. As will be described, the brake pressure so identified is then used to reestablish the brake pressure command value after the wheel recovers from the incipient lockup condition. The result of the ramping of the brake pressure is a periodic low frequency reidentification of the brake pressure producing the critical wheel slip value. This enables the apparatus to adapt to increasing values of the brake friction coefficient resulting from changes in the tyre-road surface interface. Further, as will be described, the time required to ramp the pressure to a value causing an incipient lockup condition is used to adaptively adjust the constants $k_0$ and $k_1$ of equation (4).

The routine for ramping the brake pressure begins at a decision point l08 where the value of a time $t_1$ in a RAM timing register is compared to zero. The initial value of time $t_1$ establishes a delay in the ramping of the brake pressure command value $P_c$. Thereafter, the time $t_1$ functions in establishing the ramp rate. If the time $t_1$ is greater than zero, the program proceeds to a step ll0 where the time $t_1$ is decremented. Thereafter, at a step ll2, the program proceeds to adjust the brake pressure command value $P_c$ toward a predetermined fraction of the maximum allowable hydraulic brake pressure $P_m$ in accordance with a first order lag filter equation. By setting the maximum allowable hydraulic brake pressure $P_m$ to the stored value $P_{bm}$ after an incipient wheel lockup condition is sensed (as will be described), the brake pressure command value established at step ll2 will be the predetermined fraction of the pressure producing the critical wheel slip value. In one embodiment, the predetermined fraction is 0.9 so that the resultant brake pressure produces substantially the critical wheel slip value.

As long as an incipient wheel lock condition is not detected and the operator requested brake pressure is greater than the maximum allowable hydraulic brake pressure $P_m$, the decision point and steps l08 to ll2 are repeated at the five millisecond interrupt interval until time $t_1$ has been decremented to zero. After time $t_1$ has been decremented to zero, the program proceeds from decision point l08 to decision point ll4 where a time $t_2$ in a RAM timing register is compared to zero. If the time $t_2$ is greater than zero, the program proceeds to a step ll6 where the time $t_2$ is decremented.

Following step ll6 or decision point ll4, the program proceeds to a step ll8 where the maximum allowable hydraulic brake pressure $P_m$ is incremented and the time $t_1$ is set equal to $K_n(t_2+l)$. Thereafter, the decision point and steps ll4 to ll8 will be bypassed upon repeated execution of the identify routine until time $t_1$ is again decremented to zero. From this it can be seen that the maximum allowable hydraulic brake pressure $P_m$ is periodically incremented at intervals determined by $K_n$ and time $t_2$. When time $t_2$ is decremented to zero, the maximum allowable hydraulic brake pressure $P_m$ is incremented with each $K_n$ executions of the identify routine.

Following step ll8, the program proceeds to step ll2 where the brake pressure command value $P_c$ is again set as previously described. Repeated executions of the foregoing steps function to ramp the brake pressure command value $P_c$ exponentially. This increase will be continued until (A) an incipient wheel lock condition is forced so as to force a reidentification of the brake pressure producing the critical wheel slip value via the decision point 96 and step 98 or (B) the operator requested brake pressure becomes less than the maximum allowable hydraulic pressure $P_m$.

If the brake pressure command value $P_c$ is increased to a point resulting in the wheel slip becoming greater than the critical wheel slip value, the wheels II then quickly approach a lockup condition. This incipient wheel lock condition is detected as previously described at decision point I00 or decision point I02. When the incipient wheel lockup condition is detected, the stored value $P_{bm}$ in memory at that time is the hydraulic brake pressure producing the critical wheel slip value and therefore the maximum possible tyre torque.

After a wheel lockup condition has been sensed, the program proceeds to a decision point I20 where the time $t_2$ is compared with a constant $t_{k1}$. As will be seen, these two values will be equal only if a wheel lockup condition is sensed within a predetermined time $t_{k2}$ after the brake pressure is reestablished after recovery from an incipient wheel lockup condition. A wheel lockup occurring within this period after reapplication of the brake pressure implies the application of an unstable brake pressure producing an incipient wheel lockup condition. If this condition exists, the program proceeds to a decision point I22 where the stored value $P_{bm}$, stored at step 98 and identified as the brake pressure establishing the critical wheel slip value, is compared with the brake pressure command value $P_c$ which resulted in the incipient wheel lockup condition. If greater, the program proceeds to a step I24 where the stored value of $P_{bm}$ is corrected to the brake pressure command value $P_c$. This condition represents an error in the calculation of the tyre torque. Since the hydraulic brake pressure producing the critical wheel slip value can never be greater than the brake pressure command value $P_c$ that resulted in an incipient wheel lock condition, the value of $P_{bm}$ is reduced to the value of $P_c$ causing the incipient wheel lock condition.

From decision point I20 if the time $t_2$ is not equal to $t_{k1}$, from decision point I22 if $P_{bm}$ is less than $P_c$, or from step I24, the program proceeds to a step I26 where the D-flag is set to condition the program to execute the dump routine and certain initial conditions for reapplication of brake pressure are established. The initial conditions include setting the maximum allowable hydraulic brake pressure $P_m$ equal to the stored value $P_{bm}$ (the brake pressure identified as producing the critical wheel slip value), setting the time $t_1$ equal to the constant $t_{k2}$ and setting the time $t_2$ equal to the constant $t_{k1}$.

Next, at step I27, the program executes the adaptive identifier routine that adaptively adjusts the constants $k_0$ and $k_1$ in the equation (4) in accordance with the principles of this invention. Then at step I28 the program executes the dump routine. Thereafter, during executions of the 5 ms interrupt routine of Figure 6, the identify routine is bypassed via the decision point 86 and the dump routine of step 90 is executed until the D-flag is again reset.

The dump routine executed at step I28 of the identify routine of Figure 7 and at step 90 of the interrupt routine of Figure 6 is illustrated in Figure 8. This dump routine is entered at point I30 and proceeds to a decision point I32 where wheel slip represented by the ratio of wheel speed $\omega$ to the vehicle speed $\omega_v$ of the hypothetical unbraked wheel is compared to a constant $S_k$ representing wheel speed approaching vehicle speed. $S_k$ may be, for example, 0.9 representing a wheel slip of I0 percent. If the ratio is less than $S_k$, the program proceeds to a step I34 where the brake pressure command value $P_c$ is set to zero to allow the wheel speed to recover from the incipient wheel lockup and toward vehicle speed. When decision point I32 detects wheel speed recovery, the program proceeds from decision point I32 to a step I36 where the D-flag is reset to condition the program to execute the identify routine of Figure 7. Also at this step, the maximum value of calculated tyre torque $T_{tm}$ is set to zero so that the identify routine is conditioned to reidentify the brake pressure establishing the critical wheel slip value. The program then exits the dump routine of Figure 8 and returns to the background loop of step 48.

During the following executions of the 5 millisecond interrupt routine of Figure 6, the program executes the identify routine at step 88 until the D-flag is again set at step I26 after an incipient wheel lockup condition is sensed.

Referring to Figure 9, the adaptive identifier routine of step I27 of Figure 7 is illustrated. This adaptive identifier routine is executed each time following the detection of an incipient wheel lockup condition at decision point I00 or I02 and therefore once during each brake pressure apply-dump cycle during wheel lock controlled braking.

The adaptive identifier routine is entered at point I38 and then proceeds to decision point I40 where the state of the adaptive identifier enable flag is sampled. This flag is reset at step I05 of the identify routine of Figure 7 during normal braking prior to any wheel lock controlled braking. Therefore, when the identify routine first detects an incipient wheel lockup condition, the adaptive identifier enable flag is in a reset state. With this flag in this state, the program proceeds to a step I42 where the flag is set after which the time $t_n$ that is incremented at step 53 during the execution of each 5 ms interrupt routine of Figure 6 is reset to 0 at a step I44. From step I44, the program exits the adaptive identifier routine. Steps I44 and 53 define timing means.

The apparatus as previously described then proceeds to dump the brake pressure to allow the wheel speed to recover from the incipient lockup condition and the brake pressure determined to establish the critical wheel slip value is reestablished. Thereafter, the brake pressure is ramped until an incipient wheel lockup condition is again detected.

During the next execution of the adaptive identifier routine following a detected incipient wheel lockup condition, the program proceeds from decision point I40 to a decision point I46 where the time $t_n$ is compared to a calibration constant $t_3$ which, in one embodiment, may be 0.5 seconds. The time $t_n$, having been reset to 0 following the last detection of an incipient wheel lockup condition, is the time of one brake pressure dump-apply cycle during wheel lock controlled braking.

A time $t_n$ greater than $t_3$ implies an improper estimation of the tyre torque by the expression (4) due to a change in the constants $k_0$ and $k_1$ from the assumed values. This condition indicates that the ratio $k_0/k_1$ is less than the optimum ratio resulting in a brake pressure being identified that results in a wheel slip less than the critical wheel slip value when reestablished at step 112 of Figure 7. If $t_n$ is greater than $t_3$, the program proceeds from decision point 146 to step 148 where a HI counter counting the number of consecutive times the ratio $k_0/k_1$ is higher than optimum is reset to 0. Next at a step 150, a LO counter counting the number of consecutive brake pressure dump-apply cycles the ratio $k_0/k_1$ is lower than optimum is incremented. At a decision point 152 the number in the LO counter is compared to a constant K representing the number of consecutive cycles that $t_n$ must exceed $t_3$ before the constants $k_0$ and $k_1$ are adjusted. If the count is less than K, the program sets $t_n$ to 0 at step 144 to begin timing the next brake pressure dump-apply cycle.

If the ratio $k_0/k_1$ is less than the optimum ratio for K cycles represented by $t_n$ exceeding $t_3$ for K consecutive cycles, the program proceeds from decision point 152 to a step 154 where the value of the constant $k_0$ is incremented and the value of the constant $k_1$ is decremented to increase the ratio so that the tyre torque estimated by the expression (4) is closer to the optimum. From decision point 152 or step 154, the program sets the time $t_n$ to zero at step 144 to begin timing the next cycle. Each time wheel lock controlled braking is initiated, the decision points/steps 146-154 are repeated until $t_n$ becomes less than $t_3$ indicating the identification and reapplication of a brake pressure producing substantially the critical wheel slip value and therefore maximum braking effort.

Returning to decision point 146, if the time $t_n$ is less than $t_3$, the program proceeds to a step 156 where the LO counter is reset. Thereafter, the time $t_n$ is compared with a constant $t_4$ at decision point 158. If $t_n$ is greater than $t_4$, the ratio of the constants $k_0$ and $k_1$ is substantially optimum and the program proceeds to step 144 to set $t_n$ to zero to begin timing the next cycle.

A time $t_n$ less than $t_4$ implies an improper estimation of the tyre torque by the expression (4) due to a change in the constants $k_0$ and $k_1$ from the assumed values. This condition indicates that the ratio $k_0/k_1$ is greater than the optimum ratio resulting in a brake pressure being identified that resulted in a wheel slip greater than the critical wheel slip value when reestablished at step 112 of Figure 7. The wheels 11 immediately decelerate toward lockup which is detected at decision point 100 or 102 thereby accounting for the small value of $t_n$.

If $t_n$ is less than $t_4$, the program proceeds from decision point 158 to a step 160 where the HI counter counting the number of consecutive brake pressure dump-apply cycles the ratio $k_0/k_1$ is higher than optimum is incremented. At a decision point 162, the number in the HI counter is compared to the constant K representing the number of consecutive cycles that $t_n$ must be less than $t_4$ before the constants $k_0$ and $k_1$ are adjusted. If the count is less than K, the program sets $t_n$ to 0 at step 144 to begin timing the next brake pressure dump-apply cycle.

If the ratio $k_0/k_1$ is greater than the optimum ratio for K cycles represented by $t_n$ exceeding $t_3$ for K consecutive cycles, the program proceeds from decision point 162 to a step 164 where the value of the constant $k_0$ is decremented and the value of the constant $k_1$ is incremented to decrease the ratio so that the tyre torque estimated by the expression (4) is closer to the optimum. Each time wheel lock controlled braking is initiated, the decision points 156-164 are repeated until $t_n$ becomes greater than $t_4$ indicating the identification and reapplication of a brake pressure producing substantially the critical wheel slip value and therefore maximum braking effort.

From the foregoing, it can be seen that the adaptive identifier routine of Figure 9 defines adaptive means which is effective to adjust the constants in the equation (4) for calculating tyre torque so as to maintain the duration of the brake pressure dump-apply cycle within a range between time $t_3$ and $t_4$ to thereby adjust for changes in the parameters determining the constants.

A brief summary of operation will now be described. At step 58 prior to the operator applying the vehicle brakes and at step 136 prior to brake pressure being reapplied after being dumped by the dump routine of Figure 8, the stored maximum calculated tyre torque value $T_{tm}$ is set to zero so that prior to each application of brake pressure, the identify routine is conditioned to identify the brake pressure corresponding in time to the maximum calculated tyre torque value $T_{tm}$.

As the brake pressure command value $P_c$ is increased via decision point 104 and step 106 or ramped up via the decision point 104 and decision points/steps 108 to 118, the stored value $P_{bm}$ is continually updated with each increasing calculated value of tyre torque.

When an incipient wheel lockup condition is sensed at decision point 100 or 102, the stored value of $P_{bm}$ is the brake pressure that produced the maximum calculated braking effort for the existing tyre-road interface condition. The maximum allowable hydraulic brake pressure $P_m$ is then set equal to the stored value of $P_{bm}$ at step 126.

The D-flag is then set at step 126 after which the dump routine of Figure 8 is repeated during each 5 ms interrupt to dump the brake pressure to allow the wheel speed to recover. When the wheel speed has recovered, the D-flag is reset at step 136 so that the identify routine is then executed during each 5 ms interrupt. When executed, the identify routine reapplies the brake pressure at step 112 to the predetermined fraction of the maximum allowable hydraulic brake pressure $P_m$ which was previously set equal to the stored value $P_{bm}$ that established

the critical wheel slip value. After the time $t_{k2}$ (the initial value of $t_1$ set at step l26), the brake pressure is ramped until an incipient wheel lock condition is again detected. While the brake pressure is being reapplied and thereafter ramped, the decision point 96 and step 98 are functioning to reidentify and store the brake pressure producing the critical wheel slip value.

The foregoing cycle is continually repeated as long as the operator requested brake pressure is greater than the maximum allowable hydraulic brake pressure $P_m$. The cycle time is slow so that the wheel slip is substantially continuously controlled at the critical wheel slip value.

If the road surface friction coefficient should increase while the brake pressure is being limited to prevent wheel lockup, the apparatus automatically adapts to the change via the brake pressure ramp-up function provided by the decision points/steps l08 to ll8. By ramping the brake pressure, the apparatus is caused to reidentify the brake pressure producing the critical wheel slip value and in so doing, adapts to the change in the tyre-road surface interface.

If the road surface friction coefficient should decrease while the brake pressure is being limited to prevent wheel lockup, the brake pressure command value $P_c$ becomes excessive resulting in the wheel decelerating toward lockup. This incipient lockup condition is sensed at decision point l00 or l02 and the brake pressure dumped and subsequently reapplied as previously described. During reapplication of the brake pressure, decision points 96 and step 98 will reidentify the brake pressure producing the maximum calculated braking effort for the new tyre-road surface interface condition as the wheel decelerates again toward lockup. This pressure (reduced by the fraction at step ll2) is then applied as previously described after the brake pressure is next dumped in response to the sensed incipient wheel lockup.

During wheel lock controlled braking as above described, the adaptive identifier routine of Figure 9 is executed each time an incipient wheel lockup is sensed to enable the dump routine to dump the brake pressure. Based on the time between each brake pressure dump in response to a sensed impending lockup condition, the adaptive identifier routine adjusts the constants $k_0$ and $k_1$ so that the wheel lock control cycle time is maintained within the predetermined range. In this manner, the apparatus adapts to changes in the apparatus constants over time and for varying braking conditions so as to always provide an accurate identification of the brake pressure producing the critical wheel slip value and therefore the maximum braking effort.

## Claims

l. A wheel lock control apparatus for limiting the hydraulic brake pressure $P_b$ applied to a brake (l0) of a wheel (ll) of a vehicle, the wheel lock control apparatus comprising estimating means (40,94) responsive to predetermined wheel and braking apparatus parameters for estimating the braking force tending to accelerate the wheel during the application of brake pressure; identifying means (diagram, Figure 7) for cyclically (A) identifying (96,98) the brake pressure corresponding in time to the maximum estimated brake force following each application of brake pressure, (B) detecting (l00,l02) an incipient lockup condition of the wheel, (C) dumping (l28) the brake pressure to allow the wheel to recover from the incipient lockup condition, (D) reapplying (l02) a brake pressure following recovery from an incipient wheel lockup condition at a value substantially equal to the last identified brake pressure and (E) ramping (l08,ll0,ll4-ll8) the brake pressure at a predetermined rate until the brake pressure is again dumped following detection of an incipient lockup condition of the wheel to cause reidentification of the brake pressure corresponding in time to maximum estimated brake force; timing means (53,l44) for timing the period of each cycle comprised of identifying the brake pressure, detecting an incipient lockup condition, dumping the brake pressure and reapplying a brake pressure; and adaptive identifier means (diagram, Figure 9) for adjusting the response of the responsive means so as to maintain the timed period within a predetermined range representing an identified brake pressure establishing substantially the actual maximum brake force.

2. A wheel lock control apparatus as claimed in claim l wherein the brake pressure reapplied following recovery from an incipient wheel lockup condition is a predetermined fraction of the last identified value brake pressure.

3. A wheel lock control as claimed in Claim l or Claim 2 characterised in that the estimating means estimates the tyre torque $T_t$ tending to accelerate the wheel during the application of brake pressure in accordance with the expression

$$T_t = k_0 P_b + k_1 \dot{\omega}$$

where $\dot{\omega}$ is the rate of change of wheel speed and $k_0$ and $k_1$ are constants, the constants and their relationship tending to vary over time and with braking conditions; and in that the adaptive identifier means adjusts the values of the constants $k_0$ and $k_1$ relative to one another in a sense tending to maintain the timed period within the predetermined range.

4. A method of limiting the brake pressure applied to the brakes (l0) of a wheel (ll) of a vehicle, comprising the steps of estimating the tyre torque tending to accelerate the wheel during the application of brake pressure in response to predetermined parameters; and further cyclically (A) storing the value of brake pressure corresponding in time to the maximum tyre torque monitored following each application of brake pressure, (B) detecting an incipient wheel lockup condition, (C) dumping the brake pressure to allow recovery from the detected incipient wheel lockup condition, (D) reapplying the brake pressure following a detected incipient wheel lockup condition to substantially the value of the last stored value of brake pressure and (E) ramping the brake pressure until an incipient wheel lockup condition is detected; timing each cycle of storing, detecting, dumping and reapplying; and adjusting the estimation response to the predetermined parameters in a sense tending to maintain the time of each cycle within a predetermined range representing a stored value of brake pressure establishing substantially the actual maximum tyre torque.

**Revendications**

1. Dispositif de commande de freinage en cas de blocage de roue, servant à limiter la pression hydraulique de serrage $P_b$ appliquée à un frein (10) d'une roue (11) d'un véhicule, le dispositif de commande du freinage en cas de blocage de roue comprenant des moyens d'estimation (40, 94) sensibles à des paramètres prédéterminés de la roue et d'un dispositif de freinage, de manière à estimer la force de freinage tendant à accélérer la roue pendant l'application de la pression de freinage; des moyens d'identification (schéma, figure 7) servant à réaliser de façon cyclique (A) une identification (96, 98) de la pression de freinage correspondant à cet instant à la force de freinage maximale estimée à la suite de chaque application de la pression de freinage, (B) une détection (100, 102) d'une condition de blocage commençant de la roue, (C) une réduction (128) de la pression de freinage de manière à permettre à la roue de sortir de la condition de blocage commençant, (D) une nouvelle application (102) d'une pression de freinage à la suite du rétablissement de la roue à partir de sa condition de blocage commençant, à une valeur sensiblement égale à la dernière pression de freinage identifiée, et (E) un accroissement (108, 110, 114–118) de la pression de freinage selon une fonction en rampe à un taux prédéterminé jusqu'à ce que la pression de freinage soit à nouveau réduite à la suite de la détection d'une condition de blocage commençant de la roue de manière à obtenir une nouvelle identification de la pression de freinage correspondant à cet instant à la force de freinage maximale estimée; des moyens de cadencement (53, 144) servant à commander de façon cadencée la période de chaque cycle constitué par une identification de la pression de freinage, une détection d'une condition de blocage commençant, une réduction de la pression de freinage et une nouvelle application d'une pression de freinage; des moyens d'identification adaptative (schéma, figure 9) servant à régler la réponse des moyens sensibles de manière à maintenir la période cadencée dans une gamme prédéterminée représentant une pression de freinage identifiée établissant sensiblement la force de freinage maximale réelle.

2. Dispositif de commande de freinage en cas de blocage de roue selon la revendication 1, dans lequel la pression de freinage à nouveau appliquée à la suite du rétablissement à partir d'une condition de blocage commençant de la roue est une fraction prédéterminée de la dernière pression de freinage identifiée.

3. Dispositif de commande de freinage en cas de blocage de roue selon la revendication 1 ou 2, caractérisé en ce que les moyens d'estimation estiment le couple Tt du pneumatique tendant à accélérer la roue pendant l'application de la pression de freinage, conformément à l'expression

$$T_t = k_0 P_b + k_1 \dot{\omega}$$

$\dot{\omega}$ étant le taux de variation de la vitesse de la roue et $k_0$ et $k_1$ des constantes, les constantes et leur relation tendant à varier dans le temps et avec les conditions de freinage; et en ce que les moyens d'identification adaptative règlent les valeurs des constantes $k_0$ et $k_1$ l'une par rapport à l'autre dans un sens visant à maintenir la période cadencée dans la gamme prédéterminée.

4. Procédé pour limiter la pression de freinage appliquée aux freins (10) d'une roue (11) d'un véhicule, incluant les étapes consistant à estimer le couple du pneumatique tendant à accélérer la roue pendant l'application de la pression de freinage en réponse à des paramètres prédéterminés; et en outre les étapes consistant à exécuter cycliquement (A) une mémorisation de la valeur de la pression de freinage correspondant à cet instant au couple maximum du pneumatique contrôlé à la suite de chaque application de la pression de freinage, (B) une détection d'une condition de blocage commençant de la roue, (C) une réduction de la pression de freinage de manière à permettre un rétablissement à partir de la condition détectée de blocage commençant de la roue, (D) une nouvelle application de la pression de freinage à la suite d'une condition détectée de blocage commençant de la roue, sensiblement au niveau de la dernière valeur mémorisée de la pression de freinage, et (E) un accroissement de la pression de freinage selon une fonction en rampe, jusqu'à la détection d'une condition de blocage commençant de la roue; la commande cadencée de chaque cycle de mémorisation, détection, réduction et nouvelle application; et le réglage de la réponse estimée aux paramètres prédéterminés dans un sens tendant à maintenir la durée de chaque cycle dans une gamme prédéterminée représentant une valeur mémorisée de la pression de freinage produisant sensiblement le couple maximum réel du pneumatique.

**Patentansprüche**

1. Radblockier-Steuervorrichtung zum Begrenzen des an eine Bremse (10) eines Rades (11) eines Fahrzeuges angelegten Hydraulik-Bremsdruckes $P_b$, wobei die Radblockier-Steuervorrichtung umfaßt Abschätzmittel (40, 94), die von vorbestimmten Rad- und Bremsvorrichtungs-Parametern abhängig sind, um abzuschätzen, ob die Bremskraft dazu tendiert, das Rad während des Anlegens von Bremsdruck zu beschleunigen; Identifizierungsmittel (Diagramm, Fig. 7) um zyklisch (A) den Bremsdruck zu identifizieren (96, 98), der zeitlich der maximal erwarteten Bremskraft nach jedem Anlegen von Bremsdruck entspricht, (B) einen beginnenden Blockierzustand des Rades zu erfassen (100, 102), (C) den Bremsdruck abzulassen (128), um dem Rad Erholung von dem beginnenden Blockierzustand zu erlauben, (D) einen Bremsdruck nach Erholung von einem beginnenden Radblockierzustand mit einem Wert wieder anzulegen (102), der im wesentlichen gleich dem zuletzt identifizierten Bremsdruck ist, und (E) den Bremsdruck mit einer vorbestimmten Rate gleichmäßig anwachsen zu lassen (108, 110, 114-118), bis der Bremsdruck nach Erfassen eines beginnenden Blockierzustandes des Rades wieder abgelassen wird, um eine Re-Identifizierung des Bremsdruckes, der zeitlich maximaler erwarteter Bremskraft entspricht, zu verursachen; Zeitgabemittel (53, 144) zum Festlegen der Zeitlänge jedes aus Identifizierung des Bremsdruckes, Erfassen eines beginnenden Blockierzustandes, Ablassen des Bremsdruckes und Wiederbeaufschlagen eines Bremsdruckes bestehenden Zyklus'; und adaptive Identifiziermittel (Diagramm, Fig. 9) zum Nachstellen der Abhängigkeit des abhängigen Mittels, um so die festgelegte Zeitlänge innerhalb eines vorbestimmten Bereichs zu halten, der einen identifizierten Bremsdruck darstellt, welcher im wesentlichen die aktuelle maximale Bremskraft aufbaut.

2. Radblockier-Steuervorrichtung nach Anspruch 1, bei der der nach Erholung von einem beginnenden Radblockierzustand wieder angelegte Bremsdruck ein vorbestimmter Bruchteil des zuletzt identifizierten Bremsdruckwertes ist.

3. Radblockiersteuerung nach Anspruch 1 oder 2, dadurch gekennzeichnet, daß das Schätzmittel das Reifendrehmoment Tt abschätzt, das dazu tendiert, das Rad während des Anlegens von Bremsdruck zu beschleunigen, entsprechend dem Ausdruck

$$T_t = k_0 P_b + k_1 \dot{\omega}$$

wobei $\dot{\omega}$ die Änderungsrate der Radgeschwindigkeit ist, $k_0$ und $k_1$ Konstanten sind und die Konstanten und ihre Beziehung dazu tendieren, sich mit der Zeit und mit den Bremszuständen zu ändern, und daß das adaptive Identifiziermittel die Werte der Konstanten $k_0$ und $k_1$ in Bezug aufeinander in einem Sinn nachstellt, der dazu tendiert, die festgelegte Zeitlänge innerhalb eines vorbestimmten Bereiches zu halten.

4. Verfahren zum Begrenzen des an die Bremsen (10) eines Rades (11) eines Fahrzeuges angelegten Bremsdrucks mit den Schritten, daß das Reifendrehmoment, das dazu tendiert, das Rad während des Anlegens von Bremsdruck zu beschleunigen in Abhängigkeit von vorbestimmten Parametern geschätzt wird; und weiter zyklisch (A) der Wert des Bremsdruckes gespeichert wird, der zeitlich dem maximalen Reifendrehmoment entspricht, das nach jedem Anlegen von Bremsdruck überwacht wird, (B) ein beginnender Radblockierzustand erfaßt wird, (C) der Bremsdruck abgelassen wird, um Erholung von dem erfaßten beginnenden Radblokkierzustand zuzulassen, (D) der Bremsdruck nach einem erfaßten beginnenden Radblockierzustand wieder angelegt wird mit im wesentlichen dem Wert des zuletzt gespeicherten Bremsdruckes und (E) der Bremsdruck gleichmäßig angehoben wird, bis ein beginnender Radblockierzustand erfaßt wird; daß jeder Zyklus aus Speichern, Erfassen, Ablassen und Wiederanlegen zeitlich festgelegt wird; und daß die Abschätzungs-Abhängigkeit von den vorbestimmten Parametern in einem Sinne nachgestellt wird, der dazu tendiert, die Zeitlänge jedes Zyklus innerhalb eines vorbestimmten Bereiches zu halten, der einen gespeicherten Wert des Bremsdruckes darstellt, welcher im wesentlichen das aktuelle maximale Reifendrehmoment aufbaut.

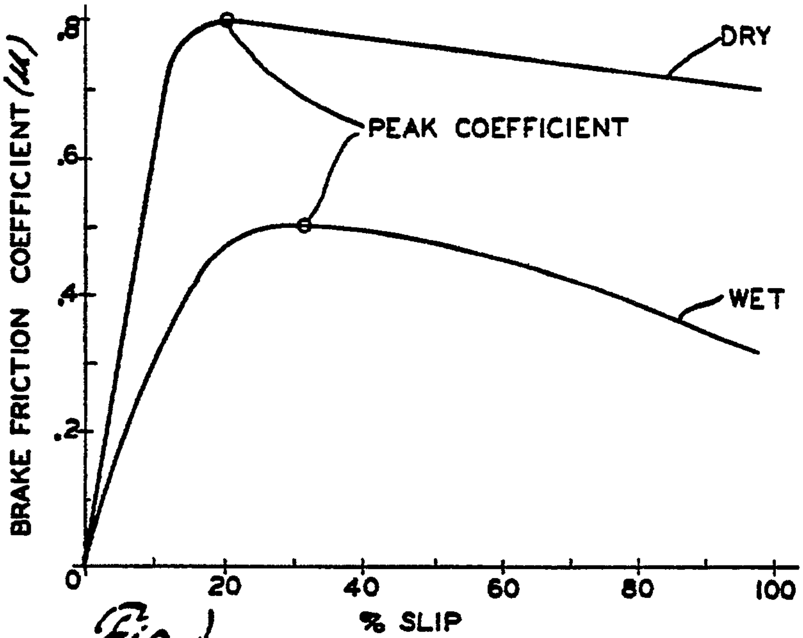


Fig.1

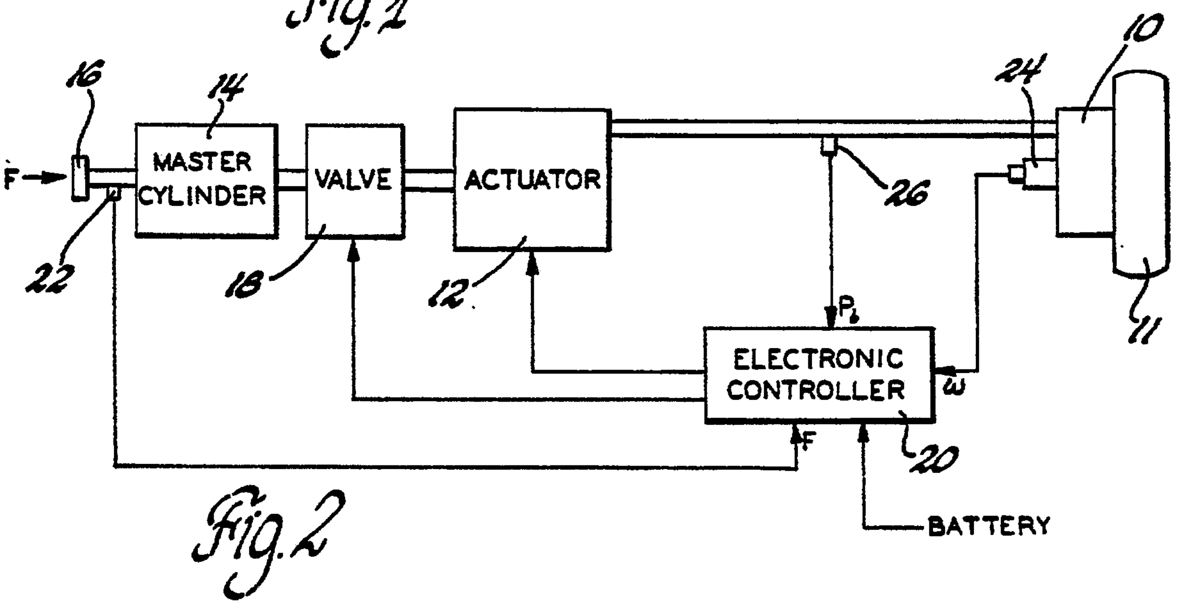


Fig.2

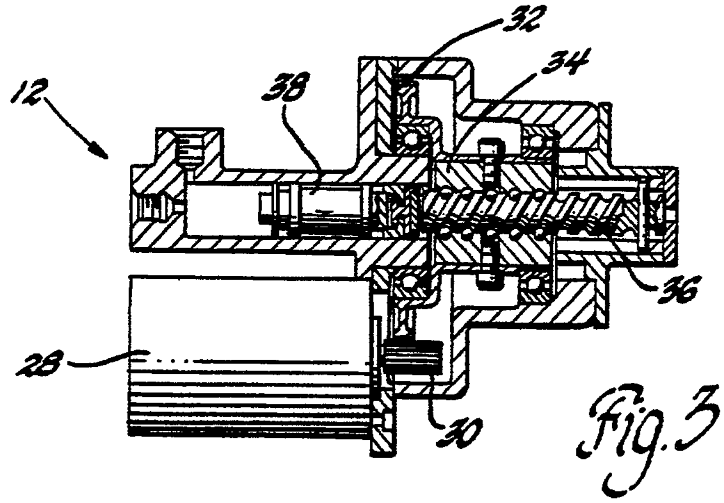


Fig.3

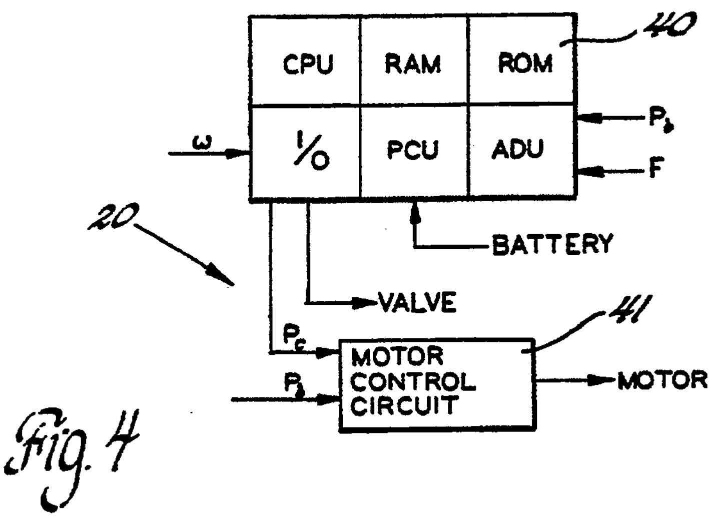


Fig. 4

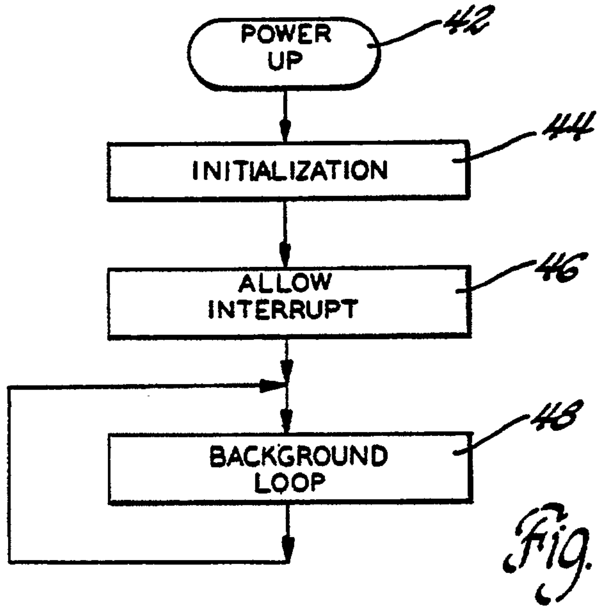


Fig. 5

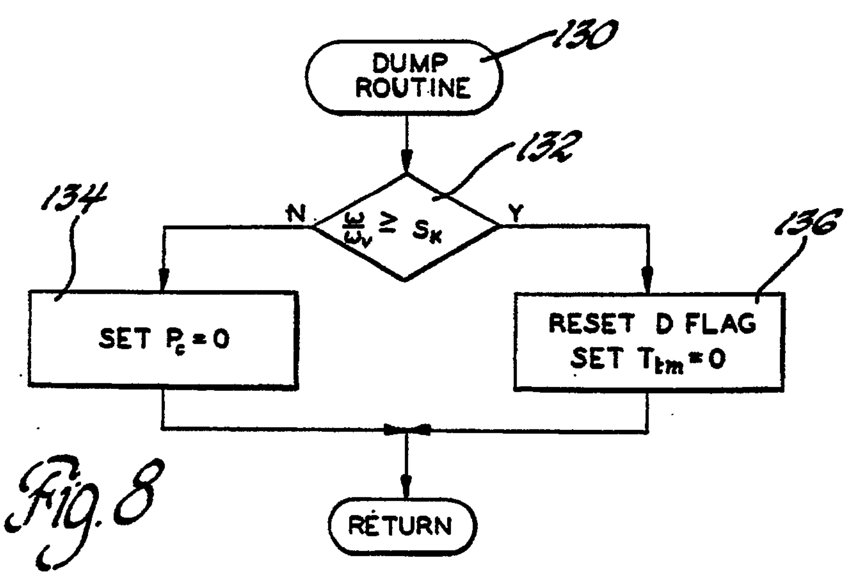


Fig. 8

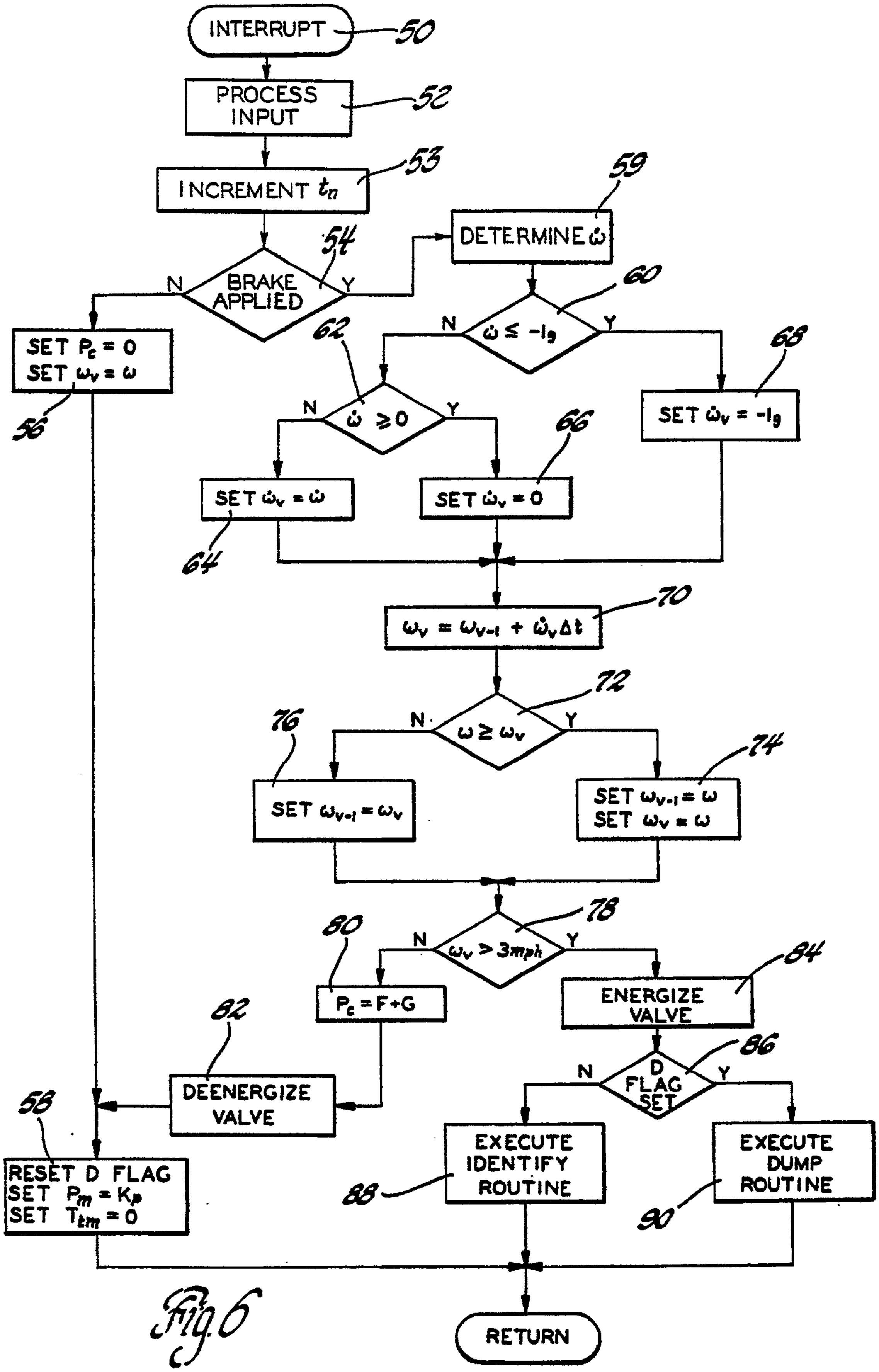
INTERRUPT
50
PROCESS INPUT
52
INCREMENT $t_n$
53
BRAKE APPLIED
54
N
Y
DETERMINE $\dot{\omega}$
59
$\dot{\omega} \leq -1_g$
60
SET $P_c = 0$
SET $\omega_v = \omega$
56
$\dot{\omega} \geq 0$
62
SET $\dot{\omega}_v = -1_g$
68
SET $\dot{\omega}_v = \dot{\omega}$
64
SET $\dot{\omega}_v = 0$
66
$\omega_v = \omega_{v-1} + \dot{\omega}_v \Delta t$
70
$\omega \geq \omega_v$
72
SET $\omega_{v-1} = \omega_v$
76
SET $\omega_{v-1} = \omega$
SET $\omega_v = \omega$
74
$\omega_v > 3mph$
78
$P_c = F+G$
80
ENERGIZE VALVE
84
DEENERGIZE VALVE
82
D FLAG SET
86
RESET D FLAG
SET $P_m = K_p$
SET $T_{tm} = 0$
58
EXECUTE IDENTIFY ROUTINE
88
EXECUTE DUMP ROUTINE
90
RETURN

Fig. 6

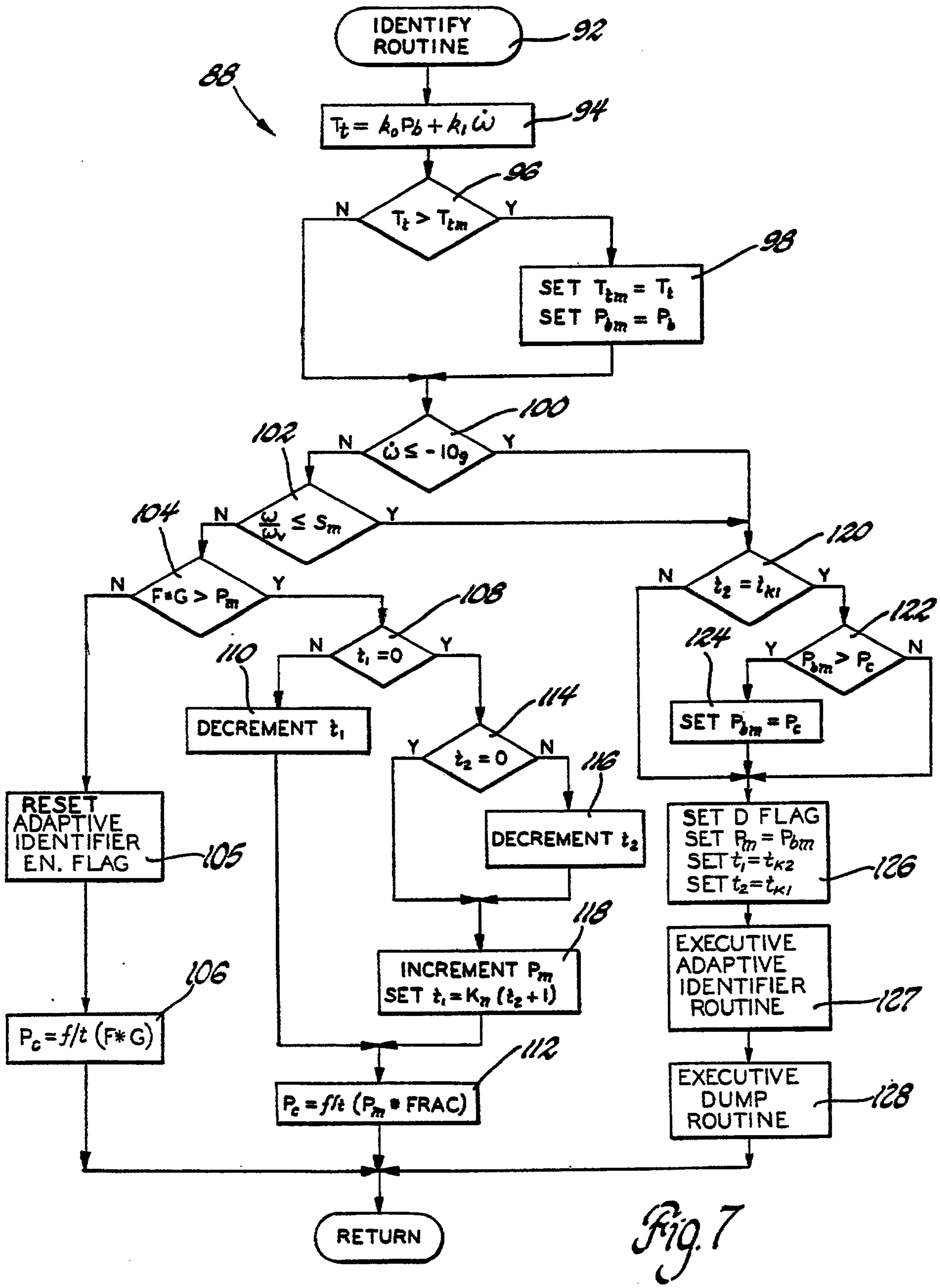
IDENTIFY ROUTINE
92
88
$T_t = k_0 P_b + k_1 \dot{\omega}$
94
96
N
$T_t > T_{tm}$
Y
98
SET $T_{tm} = T_t$
SET $P_{bm} = P_b$
100
102
N
$\dot{\omega} \leq -10_g$
Y
104
N
$\frac{\omega}{\omega_v} \leq S_m$
Y
120
N
$F*G > P_m$
Y
108
N
$t_2 = t_{K1}$
Y
122
110
N
$t_1 = 0$
Y
124
Y
$P_{bm} > P_c$
N
DECREMENT $t_1$
114
SET $P_{bm} = P_c$
Y
$t_2 = 0$
N
116
RESET ADAPTIVE IDENTIFIER EN. FLAG
105
DECREMENT $t_2$
SET D FLAG
SET $P_m = P_{bm}$
SET $t_1 = t_{K2}$
SET $t_2 = t_{K1}$
126
118
INCREMENT $P_m$
SET $t_1 = K_n (t_2 + 1)$
EXECUTIVE ADAPTIVE IDENTIFIER ROUTINE
127
106
$P_c = f/t\ (F*G)$
112
$P_c = f/t\ (P_m * FRAC)$
EXECUTIVE DUMP ROUTINE
128
RETURN

Fig. 7

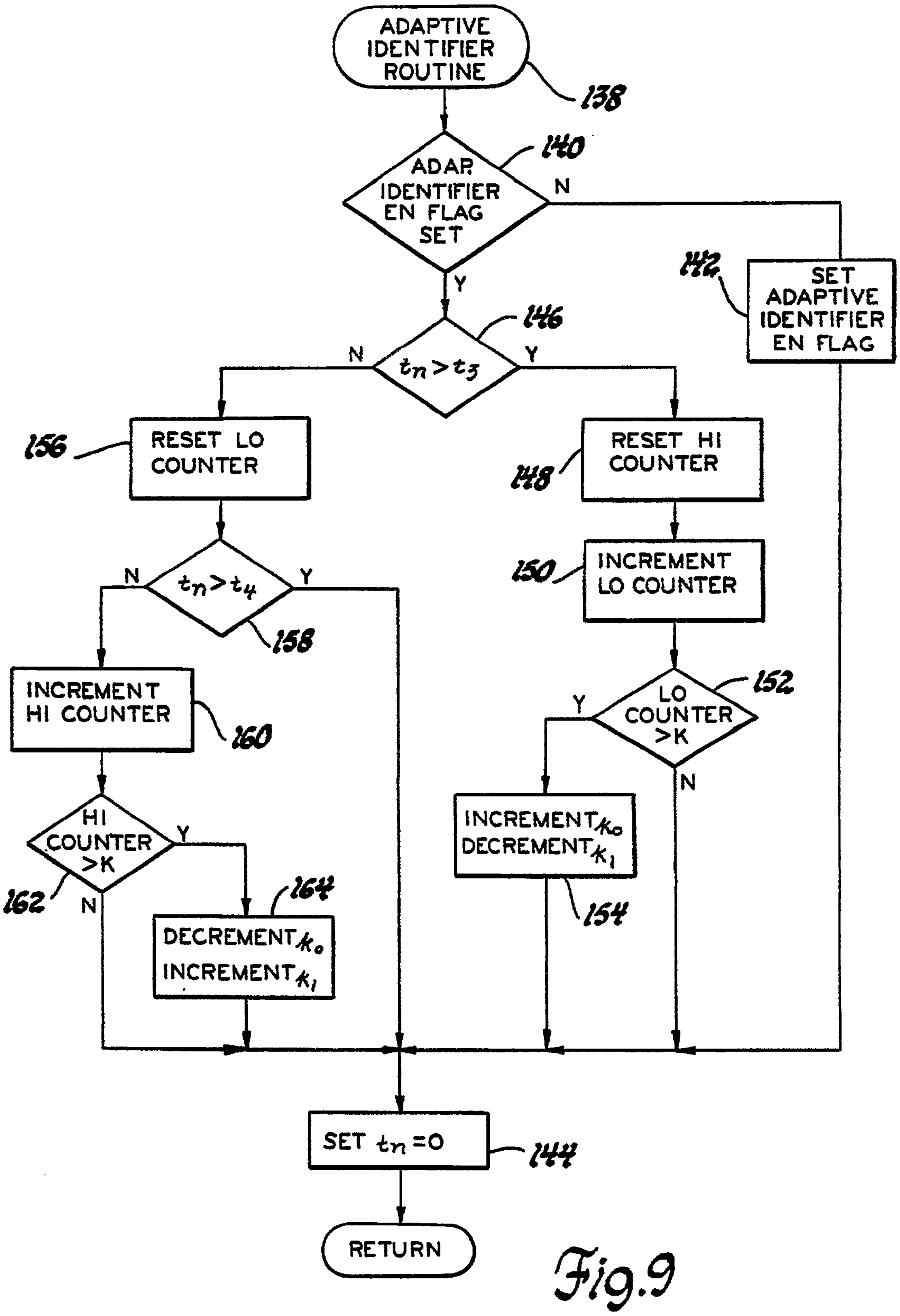

ADAPTIVE IDENTIFIER ROUTINE
138
140
ADAP. IDENTIFIER EN FLAG SET
N
Y
142
SET ADAPTIVE IDENTIFIER EN FLAG
146
N
$t_n > t_3$
Y
156
RESET LO COUNTER
RESET HI COUNTER
148
150
INCREMENT LO COUNTER
N
$t_n > t_4$
Y
158
INCREMENT HI COUNTER
160
152
Y
LO COUNTER >K
N
HI COUNTER >K
Y
162
N
164
DECREMENT $k_0$ INCREMENT $k_1$
INCREMENT $k_0$ DECREMENT $k_1$
154
SET $t_n$=0
144
RETURN


Fig.9